(19) Europäisches Patentamt
European Patent Office
Office européen des brevets

(11) Veröffentlichungsnummer: **0 004 032**
**B1**

# (12) EUROPÄISCHE PATENTSCHRIFT

(45) Veröffentlichungstag der Patentschrift: **24.03.82**

(51) Int. Cl.³: **C 08 L 27/06,** C 08 K 5/17, C 09 D 3/74, C 09 J 3/14, D 06 M 15/32, D 21 H 3/42

(21) Anmeldenummer: **79100601.8**

(22) Anmeldetag: **01.03.79**

(54) **Stabilisierte Vinylchloridhomo- oder -copolymerisatmischungen, Verfahren zur Stabilisierung ihrer wässrigen Dispersionen und Verwendungen dieser Dispersionen.**

(30) Priorität: **03.03.78 DE 2809260**

(43) Veröffentlichungstag der Anmeldung: **19.09.79 Patentblatt 79/19**

(45) Bekanntmachung des Hinweises auf die Patenterteilung: **24.03.82 Patentblatt 82/12**

(84) Benannte Vertragsstaaten: **BE CH DE FR GB IT NL SE**

(56) Entgegenhaltungen:
**DE-A-1 544 639**
**FR-A-2 152 001**

(73) Patentinhaber: **WACKER-CHEMIE GMBH, Prinzregentenstrasse 22, D-8000 München 22 (DE)**

(72) Erfinder: **Häfener, Klaus, Marienbergerstrasse 25, D-8263 Burghausen (DE)**
Erfinder: **Adler, Klaus, Dr. Dipl.-Chemiker, Lindenweg 13, D-8263 Burghausen (DE)**
Erfinder: **Eck, Herbert, Dr. Dipl.-Chemiker, Burg 17, D-8263 Burghausen (DE)**

**EP 0 004 032 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Stabilisierte Vinylchloridhomo- oder -copolymerisatmischungen, Verfahren zur Stabilisierung ihrer wässrigen Dispersionen und Verwendung dieser Dispersionen

Polyvinylchloridpolymerisate müssen üblicherweise durch Zusatz von Stabilisatoren gegen die nachteiligen Einwirkungen von Wärme und Licht geschützt werden. Dazu werden üblicherweise Schwermetallsalze kohlenstoffreicher Carbonsäuren verwendet, deren Wirkung gegebenenfalls durch weitere Costabilisatoren, wie z. B. epoxidierte Pflanzenöle, Ester der phosphorigen Säure, Acetoacetamide, mehrwertige Alkohole oder Äthylendiamintetraessigsäure und deren Salze gesteigert werden kann.

Aus der DE-OS 1 544 639 ist bereits bekannt, Äthylendiamintetraacetat als Costabilisator in polyvinylchloridhaltigen Massen einzusetzen. Voraussetzung der Stabilisierung ist dort die Anwesenheit eines schwermetallhaltigen Hauptstabilisators.

Versuche, Costabilisatoren alleine als Stabilisatoren einzusetzen, führen nicht zu einer Verbesserung der Stabilität von Polyvinylchloridpolymerisaten, wie ein Vergleichsversuch in der DE-OS 1 544 639 belegt. Der Schwermetallgehalt solcher Hauptstabilisatoren ist bei vielen Anwendungszwecken physiologisch nicht unbedenklich. Häufig ist die Einarbeitung in wässrige Dispersionen erschwert, aus Polymermassen wiederum können die häufig hydrophoben Stabilisatoren wieder ausschwitzen.

Aus der FR-PS 2 152 001 ist bekannt, polymere Festharze, die sich durch UV-Bestrahlung zersetzen können, dagegen durch Zusatz von Salzen von Diestern der Äthylendiaminessigsäure mit Zn, Mn, Ni, Co, Cr, Cu, Al, Ti und Fe zu stabilisieren. Diese Verbindungen leisten keinen Beitrag zur Wärmestabilisierung der Polymeren und lassen sich nicht erfindungsgemäss in wässrige Polymerdispersionen einbringen.

Es ist weiterhin bekannt, Äthylendiamintetraessigsäure bzw. deren Salze in Mengen von unter 0,005 Gew.-%, bezogen auf Harz, nach der Polymerisation den Polymerdispersionen zuzugeben, die aufgrund ihres Herstellungsverfahrens Spuren von Schwermetall, wie beispielsweise Eisen oder Kupfer, enthalten.

Aufgabe der Erfindung ist es somit, Hauptstabilisatoren für wässrige Vinylchloridhomo- oder -copolymerdispersionen und deren Verarbeitungsprodukte zu finden, die auch bei Verzicht auf schwermetallhaltige Hauptstabilisatoren ausgezeichnet stabilisieren.

Gegenstand der Erfindung sind Vinylchloridhomo- oder -copolymerisatmischungen mit mindestens 25 Gew.-% Vinylchlorideinheiten im Polymerisat und K-Werten zwischen 20 und 80, stabilisiert in wässriger Dispersion mit Teilchengrössen zwischen 0,001 und 15 $\mu m$, in Gegenwart üblicher Mengen Schutzkolloid und/oder Emulgatoren, mit Feststoffgehalten zwischen 10 und 60 Gew.-%, bezogen auf Gesamtdispersion, mit einer Substanz der allgemeinen Formel

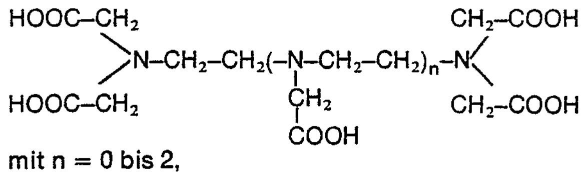

mit n = 0 bis 2,

oder deren wasserlöslichen Salzen, dadurch gekennzeichnet, dass die Polymerisate 0,3 bis 6 Gew.-%, bezogen auf Polymerisatanteil, des Stabilisators enthalten.

Ein weiterer Gegenstand der Erfindung sind stabilisierte Vinylchloridhomo- oder -copolymerisatmischungen nach Anspruch 1, dadurch gekennzeichnet, dass als wasserlösliche Salze der Substanzen der genannten allgemeinen Formel mit n = 0 bis 2, Alkali-, Ammonium-oder Erdalkalisalze enthalten sind.

Ein weiterer Gegenstand der Erfindung ist ein Verfahren zur Stabilisierung wässriger Vinylchloridhomo- oder -copolymerdispersionen mit mindestens 25 Gew.-% Vinylchlorideinheiten im Polymerisat, das dadurch gekennzeichnet ist, dass Substanzen der genannten allgemeinen Formel mit n = 0 bis 2 in Mengen von 0,3 bis 6 Gew.-%, bezogen auf Polymeranteil, der Dispersion im Anschluss an die Polymerisation vor der Auf- bzw. Weiterverarbeitung zugemischt werden.

Ein weiterer Gegenstand der Erfindung ist die Verwendung von stabilisierten Dispersionen nach Anspruch 1 bis 3 in Bindemitteln, in Beschichtungsmassen, Anstrich- und Klebstoffen, Textilhilfsstoffen und Papierstreichmassen.

Überraschenderweise wurde gefunden, dass die Zugabe von 0,3 bis 6 Gew.-% der Substanzen der genannten allgemeinen Formel mit n = 0 bis 2 oder deren wasserlöslicher Salze wässrige Vinylchloridhomo- oder -copolymerdispersionen alleine ohne weitere Stabilisierungsmittel gut gegenüber Wärme und Licht stabilisieren. Nach dem erfindungsgemässen Verfahren stabilisierte Dispersionen und deren Verarbeitungsprodukte zeigen bessere Stabilität als Polyvinylchloridpolymermassen, wie sie gemäss der DE-OS 1 544 639 in Kombination von schwermetallhaltigen Carbonsäuresalzen als Hauptstabilisator und Äthylendiamintetraacetat als Costabilisator erzeugt werden.

Die erfindungsgemäss stabilisierten Vinylchloridhomo- oder -copolymerdispersionen mit mindestens 25 Gew.-% Vinylchlorideinheiten im Polymeren können folgende copolymerisierbare Monomere enthalten: Olefine, wie z. B. Äthylen, Propylen, Octen, Dodecen, Vinylester von gerad- oder verzweigtkettigen, aliphatischen Carbonsäuren mit 1 bis 18 Kohlenstoffatomen, wie z. B. Vinylacetat, Vinylpropyonat, Vinylbutyrat, Vinylversaticester, Vinyllaurat, Vinylstearat, mit ungesättigten Carbonsäuren, Carbonsäureamiden, Carbonsäureestern mit aliphatischen geradkettigen oder verzweigten Alkoholen mit 1 bis 18 Kohlenstoffatomen. Als Carbonsäuren kommen z. B. Acrylsäure, Methacrylsäure, Ithaconsäure, Maleinsäure, Fumarsäure in Frage. Weiterhin eignen sich andere copolymerisierbare Verbindungen, wie z. B. Vinylidenchlorid, Vinylidenfluorid und solche mit reaktiven Gruppen, wie Hydroxyäthyl-, Hydroxypropyl-, Hydroxyhexyl-Acrylate oder -methacrylate, Halbester der Monoamide der Malein- oder Fumarsäure, polymerisierbare Halbester (Vinyl oder Allyl) von aliphatischen Dicarbonsäuren, z. B. Bernstein-, Adipinsäure, Vinyl oder Acrylsilane, Allylester der Acetessigsäure bzw. Diacetylessigsäure, Allylamidodichlortriacin. Die K-Werte der Polymerisate liegen zwischen 20 und 80.

Die Dispersionen werden nach den üblichen bekannten Verfahren der Dispersions-, Emulsions- bzw. Mikroperlpolymerisation oder auch durch Pfropfpolymerisation hergestellt. Das Polymerisationsverfahren ist für die erfindungsgemässe Stabilisierung der Dispersionen nicht entscheidend bezüglich der eingesetzten Polymerisationsinitiatoren bzw. Polymerisationshilfsstoffe, solange die Bedingung erfüllt bleibt, dass die Teilchengrössen der Polymeren in der Dispersion unter etwa 15 $\mu$m bleibt. Es wurde die Beobachtung gemacht, dass der Stabilisierungseffekt der Dispersion sowohl mit abnehmender Teilchengrösse als auch mit zunehmender Porösität positiv beeinflusst wird. Häufig liegen die Polymerteilchengrössen unter 10 $\mu$m, eine Teilchengrösse unter 5 $\mu$m ist besonders geeignet. Im allgemeinen liegen die Teilchengrössen von Dispersionen über 0,001 $\mu$m.

Die Feststoffgehalte der Dispersionen liegen im allgemeinen zwischen 10 und 60 Gew.-%. Zur Anwendung kann die Dispersion als solche und im Gemisch mit Füllstoffen, Farbstoffen, Verdikkungs- oder Härtungsmitteln und weiteren Hilfsstoffen erfolgen. Die aus den Dispersionen auf diese Weise hergestellten Beschichtungsmaterialien, Anstrichstoffe auf Dispersionsbasis, Klebstoffe, Bindemittel für Textilhilfsstoffe, Bindemittel für Papierstreichmassen zeichnen sich durch ausgeprägte Wärme- und Lichtstabilität aus.

In den Beispielen werden die in der Tabelle 1 aufgeführten Dispersionen untersucht. Die in den weiteren Tabellen angegebenen prozentualen Mengen an Substanzen der genannten Formel mit n = 0 bis 2 beziehen sich jeweils auf den Festharzgehalt der Dispersion, der in allen Dispersionen bei 50 Gew.-% lag.

Die Tabelle 2 zeigt die wärmestabilisierende Wirkung von Substanzen der genannten Formel mit n = 0 bis 2 bzw. deren Natriumsalzen in den verschiedenen Dispersionsfilmen sowie in Abhängigkeit von deren eingesetzten Mengen.

Die ausgezeichnete Stabilisatorwirkung geht hieraus klar hervor. Als Bewertung dient folgende Skala:

| | |
|---|---|
| farblos | 1 |
| hellgelb | 2 |
| gelb | 3 |
| hellbraun | 4 |
| braun | 5 |
| dunkelbraun | 6 |
| schwarzbraun | 7 |

wobei farblos als beste Beurteilung gilt. Ein Minuszeichen hinter der Zahl bedeutet, dass die Bewertung zwischen dieser und der nächsthöheren Zahl liegt. Bei allen getesteten Dispersionsfilmen ist eine deutliche stabilisierende Wirkung der Äthylendiamintetraessigsäure bzw. deren Natriumsalz erkennbar.

In der Tabelle 4 werden die hier beanspruchten Substanzen mit einer Reihe bekannter Polyvinylchloridstabilisatoren verglichen. Keiner von diesen erreicht die ausgezeichnete Wirkung der Salze der Substanzen der genannten Formel mit n = 0 bis 2. Alle getesteten Stabilisatoren zeigen höchstens eine weit schlechtere Wirkung. Viele lassen sich nicht in die wässrigen Dispersionen einarbeiten oder verfärben diese bereits in der Kälte.

Aus Tabelle 5 geht klar hervor, dass sich Äthylendiamintetraessigsäure und deren Salze entgegen den Behauptungen der DE-OS 1 544 639 nicht als Costabilisatoren eignen.

In der Tabelle 6 schliesslich wird gezeigt, dass es unerheblich ist, ob Äthylendiamintetraessigsäure oder deren Natrium- oder Zinksalz eingesetzt wird. Auch der pH-Wert der Dispersion spielt keine nennenswerte Rolle. Zinksulfat alleine ist dagegen ohne Wirkung.

Der unpigmentierte Film der Dispersion 1 wurde auf Aluminiumfolien der Freibewitterung ausgesetzt. Nach 120 Tagen ist die stabilisierte Probe (1% des Natriumsalzes der Äthylendiamintetraessigsäure) leicht verfärbt, die nicht stabilisierte dunkelbraun.

Tabelle 1
Harzzusammensetzung der verwendeten Dispersionen (Gewichtsteile)

| | 1 | 2 | 3 | 4 | 5 | 6 | 7 | 8 | 9 | 10 | 11 | 12 | 13 |
|---|---|---|---|---|---|---|---|---|---|---|---|---|---|
| Vinylchlorid | 65 | 65 | 60 | 60 | 63 | 70 | 25 | 100 | 47 | 60 | 60 | 40 | 50 |
| Vinylacetat | 15 | 15 | 20 | 40 | 17 | 24 | 60 | – | – | 15 | 15 | 20 | 50 |
| Äthylen | 20 | 20 | 20 | – | 17,5 | 6 | 15 | – | – | 15 | 19 | – | |
| Butylacrylat | – | – | – | – | – | – | – | – | 25 | – | – | – | |
| Hydroxypropylacrylat | – | – | – | – | – | – | – | – | – | 10 | – | – | |
| 2-Äthylhexylacrylat | – | – | – | – | – | – | – | – | 25 | – | – | – | |
| Vinyltriäthoxysilan | – | – | – | – | – | – | – | – | – | – | 3 | – | |
| Glycidylmethacrylat | – | – | – | – | – | – | – | – | – | – | – | 10 | |
| 1-Allylamino-3,5-dichlor-Triazin | – | – | – | – | – | – | – | – | – | – | 3 | – | |
| Vinyllaurat | – | – | – | – | – | – | – | – | – | – | – | – | |
| Allylacetoacetat | – | – | – | – | – | – | – | – | – | – | – | – | |
| Veova**** | – | – | – | – | – | – | – | – | 3 | – | – | 30 | |
| N-Methylolacrylamid | – | – | – | – | 2,5 | – | – | – | – | – | – | – | |
| Maleinsäureanhydrid | – | – | – | 0,2 | – | – | – | – | – | – | – | – | 0,2 |
| Acrylamid | 1 | – | – | – | – | 1 | – | – | 1 | 1 | 1 | 2 | |
| Acrylsäure | 1 | – | – | – | – | 1 | – | – | 2 | 1 | 1 | 1 | |
| nichtionogener Emulgator* | 5,5 | 2,5 | 1 | 3,1 | – | 4,5 | 2 | 2 | 3,5 | 4,3 | 5,5 | 5 | 3,0 |
| Polyvinylalkohol** | – | – | 5,5 | – | 5,5 | – | 4,5 | – | – | – | – | – | |
| Vinylsulfonat | 0,8 | 0,1 | – | 0,15 | – | 0,8 | – | – | 0,5 | 0,8 | 0,6 | 0,8 | 0,2 |
| Anionischer Emulgator*** | 0,3 | 0,15 | – | 1,2 | – | 0,3 | – | 0,4 | 0,3 | 0,3 | 0,25 | 0,2 | 1,2 |
| Hydroxyäthylcellulose | – | 2 | – | – | – | – | – | – | – | – | – | – | |

* Langkettiger aliphatischer Alkohol-polyglycoläther.
** Verseifungszahl 140 Viskosität nach Höppler (20° C) 5
*** Natriumalkylsulfonat
**** Vinylester von Versatic® -Säuren (Fa. Shell AG).

Tabelle 2
Wärmestabilisierende Wirkung von einer Substanz der allgemeinen Formel

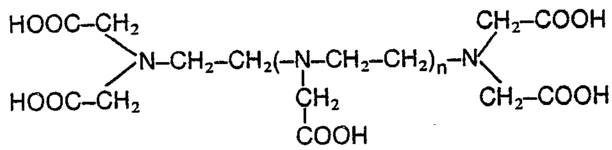

mit n = 0 bis 2,

in Dispersionfilmen. Lagerung bei 140° C 20 Stunden.

| Dispersions-Nr. | 1 | 2 | 3 | 4 | 5 | 6 | 7 | 8 | 9 | 10 | 11 | 12 | 13 |
|---|---|---|---|---|---|---|---|---|---|---|---|---|---|
| ohne ÄDTE** | 4– | 3– | 6 | 6 | 5 | 6 | 6 | 5* | 6 | 5– | 4 | 5 | 7– |
| 0,4% ÄDTE** | 4 | 3 | 5 | 4– | 5 | 5 | 3 | 4* | 4 | 5 | 4 | 3 | 7 |
| 1% ÄDTE** | 3 | 3 | 4 | 2 | 3 | 4 | 2– | 3* | 3 | 3 | 3 | 3 | 6 |
| 2% ÄDTE** | 2 | 2 | 2 | 2 | 2 | 3– | 3 | 2* | 2 | 2 | 2 | 2 | 4 |
| 4% ÄDTE** | 1– | 1 | 1– | – | – | 2 | – | – | – | – | – | – | 2 |
| 0,4% DÄTPE–Na*** | – | 3 | – | – | – | – | – | – | – | – | – | – | – |
| 0,8% DÄTPE–Na*** | – | 2– | – | – | – | – | – | – | – | – | – | – | – |
| 0,8% TÄTHE–Na**** | – | 3 | 2– | – | 2– | – | – | 3– | – | – | – | – | – |

* violettstichig
** Äthylendiamintetraessigsäure
*** Natriumsalz der Diäthylentriaminpentaessigsäure
**** Natriumsalz der Triäthylentetraaminhexaessigsäure

Tabelle 3
UV-stabilisierende Wirkung von ÄDTE–Na
Belichtungsdauer 160 Stunden

| Dispersions-Nr. | ohne ÄDTE–Na | 2% ÄDTE–Na | 4% ÄDTE–Na |
|---|---|---|---|
| 1 | 4 | 2– | * |
| 2 | 3 | 2 | 2 |
| 3 | 3 | 2 | * |

* keine Messung

Tabelle 4

| Stabilisatorart | In Disp. 1 Stab.-Menge % | Beur-teilung | In Disp. 2 Stab.-Menge % | Beur-teilung | In Disp. 3 Stab.-Menge % | Beur-teilung |
|---|---|---|---|---|---|---|
| – | – | 3 | – | 3– | – | 3– |
| ÄDTE–Na | 2 | 1– | 4 (od. 2) | 1– | 2 | 1– |
| Sn 41 S (Hoechst) | 4 | 1– | 4 | 2 | 4 | 2 |
| Irgastab CZ 57 | 3 | 3– | | | | |
| Irgastab/Tinuvin 320 | 4/4 | 2– | | | | |
| Irgastab/Reoplast 39 | 3/3 | 3 | | | | |
| Reoplast 39 | 4 | 4 | 4 | 2– | 4 | 2– |
| Reoplast/BC 206 | 4/3 | 3 | | | | |
| Reoplast/Tinuvin 320 | 4/4 | 3– | | | | |
| Irgastab A 70 | 4 | 3 | 4 | 3 | 4 | 4[1] |
| Irgastab/Tinuvin 320 | 4/4 | 3– | | | | |
| Irgastab/Irgastab CZ 57 | 4/4 | 2 | | | | |
| Tinuvin 320 | 4 | 2– | | | | |
| Tinuvin/BC 206 | 4/4 | 4 | | | | |
| Irgastab 17 M | 4 | 2 | | | | |
| Irgastab D 671 | 4 | 2– | | | | |
| DÄTPE–Na | – | | 2 | 1– | | |
| TÄTHE–Na | 2 | 1– | 2 | 1– | 4 | 1– |

Vergleichsversuche von verschiedenen, technisch eingesetzten PVC-Stabilisatoren mit ÄDTE–Na, DÄTPE–Na bzw. TÄTHE–Na, Lagerung 20 Stunden bei 130° C.

[1] verursacht durch starke Eigenfärbung.

Folgende Stabilisatoren schwitzen so stark aus oder liessen sich nur äusserst ungenügend einmischen, dass eine Beurteilung nicht sinvoll erscheint: Irgastab CZ 113; Irgastab CH 55; Irgastab CZ 11; Irgastab BC 206 (alleine). Die folgenden Stabilisatoren verfärbten die Dispersion bereits beim Einmischen so stark, dass sie für die Praxis ausscheiden: Plastonox 2246 (braun); Dekamethylenglykol-bis-β-amino-crotonat (gelb); Hexandiol-1,6-bis-β-aminocrotonat (gelb) und Glycerin-tris-β-aminocrotonat (gelb).

Tabelle 5

Vergleichsversuche mit ÄDTE–Na als Costabilisator bei der Dispersion 1 und 4; Lagerung 20 Stunden bei 140° C

| Stabilisatorart | Stabilisatormenge % | Beurteilung |
|---|---|---|
| –[1] | – | 3– |
| –[2] | – | 5 |
| ÄDTE–Na[1] | 0,6 | 2 |
| ÄDTE–Na[2] | 1,0 | 1– |
| ÄDTE–Na[2] | 1,0 | 3 |
| Tinuvin 320 | 4 | |
| ÄDTE–Na[2] | 1,0 | 3 |
| Irgastab CZ 57 | 4 | |
| ÄDTE[1]–Na | 0,6 | 3– |
| SN 41 S | 0,6 | |

[1] Dispersion 1
[2] Dispersion 4

Tabelle 6

Vergleich von ÄDTE, sowie deren Natrium- und Zinksalz bei verschiedenen pH-Werten. Getestet wurde die Dispersion 4, Lagerung 20 Stunden bei 140° C ($ZnSO_4$ als Vergleichsversuch)

| | ohne Stabilisierung | ÄDTA 0,4% | 1,0% | 2% | ÄDTA–Na 0,4% | 1% | 2% | ÄDTA–Zn 0,4% | 1% | 2% | $ZnSO_4$ 2% |
|---|---|---|---|---|---|---|---|---|---|---|---|
| pH 3,3 | 5 | 4 | 1– | 2 | – | – | – | – | – | – | – |
| pH 5 | – | – | – | – | 4 | – | – | 4 | – | – | – |
| pH 6 | 6 | – | – | – | 4 | 2– | 2– | – | 2– | – | 7 |
| pH 7 | 7 | – | – | – | – | – | 1– | – | – | 1– | – |

Erklärung der Markennamen:

| | |
|---|---|
| Irgastab ® CZ 57 | Pastenförmiger Ca/Zn-Stabilisator mit 70% epoxidierten Ölen |
| Irgastab CZ 11 | etwas höhere Stabilität als CZ 57 |
| Irgastab BC 206 | flüssiger Ba/Cd/Zn-Stabilisator mit synergetisch wirkenden Zusätzen |
| Tinuvin ® 320 | Benzotriazoltyp |
| Reoplast ® 39 | Weichmacher auf Basis epoxidierten Sojabohnenöls, Octyloleat, Butyloleat |
| SN 41 S | organischer Zinnstabilisator (Hoechst-AG, Frankfurt-Hoechst, BRD) |

**Patentansprüche**

1. Vinylchloridhomo- oder -copolymerisatmischungen mit mindestens 25 Gew.-% Vinylchlorideinheiten im Polymerisat und K-Werten zwischen 20 und 80, stabilisiert in wässriger Dispersion mit Teilchengrössen zwischen 0,001 und 15 μm, in Gegenwart üblicher Mengen Schutzkolloid und/oder Emulgatoren, mit Feststoffgehalten zwischen 10 und 60 Gew.-%, bezogen auf Gesamtdispersion, mit einer Substanz der allgemeinen Formel

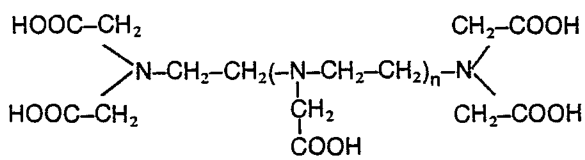

mit n = 0 bis 2,

oder deren wasserlöslichen Salzen, dadurch gekennzeichnet, dass die Polymerisate 0,3 bis 6 Gew.-%, bezogen auf Polymerisatanteil, des Stabilisators enthalten.

2. Vinylchloridhomo- oder -copolymerisatmischungen nach Anspruch 1, dadurch gekennzeichnet, dass sie als wasserlösliche Salze der Substanzen der allgemeinen Formel

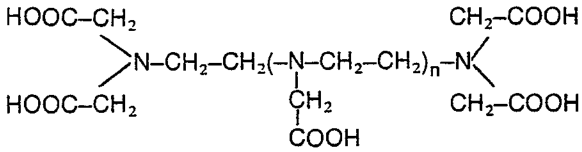

mit n = 0 bis 2,

Alkali-, Ammonium oder Erdalkalisalze enthalten.

3. Verfahren zur Stabilisierung wässriger Vinylchloridhomo- oder -copolymerdispersionen mit mindestens 25 Gew.-% Vinylchlorideinheiten im Polymerisat durch Substanzen der allgemeinen Formel

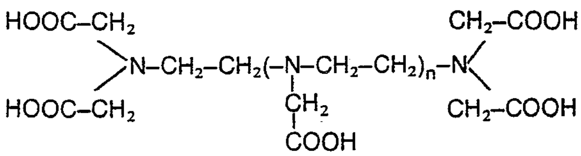

mit n = 0 bis 2,

bzw. deren wasserlösliche Salze, dadurch gekennzeichnet, dass die Stabilisatoren in Mengen von 0,3 bis 6 Gew.-%, bezogen auf Polymerisatanteile der Dispersion, im Anschluss an die Polymerisation vor der Auf- und Weiterverarbeitung eingemischt werden.

4. Verwendung von Dispersionen nach Anspruch 1 bis 3 in Bindemitteln, in Beschichtungsmassen, Anstrich- und Klebstoffen, Textilhilfsstoffen und Papierstreichmassen.

**Claims**

1. Vinyl chloride homopolymer or copolymer mixtures having at least 25% by weight of vinyl chloride units in the polymer and having K values of between 20 and 80, stabilized in an aqueous dispersion having particle sizes of between 0,001 and 15 $\mu$m, in the presence of the customary quantities of protective colloid and/or emulsifiers, and having solids contents of between 10 and 60% by weight, calculated on the total dispersion, and containing a substance of the general formula

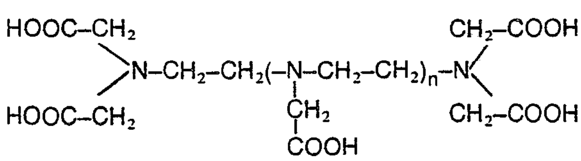

n being from 0 to 2,

or the water-soluble salts thereof, characterized in that said polymers contain from 0,3 to 6% by weight, calculated on the proportion of polymer, of the stabilizer.

2. Vinyl chloride homopolymer or copolymer mixtures according to claim 1, characterized in that said polymers contain as the water-soluble salts of the substances of the general formula

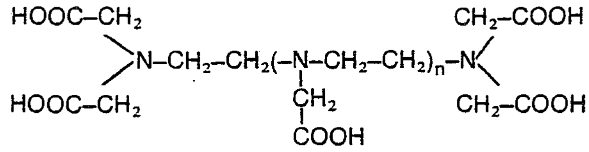

n being from 0 to 2,

alkali metal salts, ammonium salts or alkaline earth metal salts.

3. Process for the stabilization of aqueous vinyl chloride homopolymer or copolymer dispersions having at least 25% by weight of vinyl chloride units in the polymer, by means of substances of the general formula

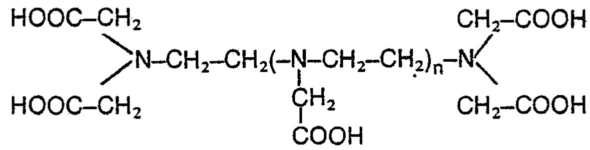

n being from 0 to 2,

or the water-soluble salts thereof, respectively, characterized in that the stabilizers are added, after polymerization and before working up and further processing, in quantities of from 0,3 to 6% by weight, calculated on the proportion of polymer in the dispersion.

4. Use of dispersions according to claim 1 to 3 in binders, coating compositions, paints, adhesives, textile auxiliaries and paper-coating compositions.

**Revendications**

1. Mélanges d'homo- ou de copolymères du chlorure de vinyle contenant au moins 25% en poids de motifs chlorure de vinyle dans le polymère et ayant des valeurs K comprises entre 20 et 80, stabilisés en dispersion aqueuse avec des tailles de particules comprises entre 0,001 et 15 $\mu$m, en présence des quantités habituelles de colloïde protecteur et/ou d'émulsionnants, avec des teneurs en matières solides comprises entre 10 et 60% en poids, par rapport à la dispersion totale, avec une substance répondant à la formule générale

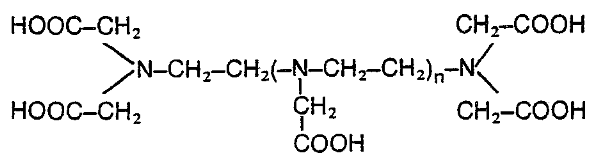

dans laquelle n est un nombre de 0 à 2,
ou ses sels solubles dans l'eau, mélanges caractérisés en ce que les polymères contiennent de 0,3 à 6% en poids du stabilisant par rapport à la partie polymère.

2. Mélanges d'homo- ou de copolymères du

chlorure de vinyle suivant la revendication 1, caractérisé en ce qu'ils contiennent, comme sels hydrosolubles, des substances répondant à la formule générale

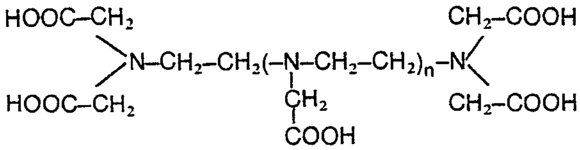

avec n = 0 à 2,

des sels de métaux alcalins, d'ammonium ou de métaux alcalinoterreux.

3. Procédé de stabilisation de dispersions aqueuses d'homo- ou de copolymères du chlorure de vinyle contenant au moins 25% en poids de motifs chlorure de vinyle dans le polymère, par des substances répondant à la formule générale

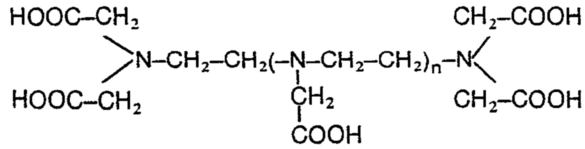

avec n = 0 à 2,

ou leurs sels solubles dans l'eau, procédé caractérisé en ce que les stabilisants sont mélangés après la polymérisation, avant le traitement complémentaire ou le traitement ultérieur, en des quantités de 0,3 à 6% en poids, par rapport aux constituants polymères de la dispersion.

4. Utilisation de dispersions suivant l'une quelconque des revendications 1 à 3 dans des liants, des masses d'enduction, des peintures et des adhésifs, des auxiliaires textiles et des produits de couchage pour le papier.